# EUROPÄISCHE PATENTSCHRIFT

(11) **EP 1 375 309 B1**
(45) Veröffentlichungstag und Bekanntmachung des Hinweises auf die Patenterteilung: **30.03.2005**
(21) Anmeldenummer: 03014126.1
(22) Anmeldetag: 24.06.2003
(51) Int. Cl.: B62D 27/02, B62D 25/06, B62D 25/07

(54) **Fahrzeug-Strukturbereich aus einem Trägerbauteil und zwei damit verbundenen, aneinander angrenzenden Blechbauteilen**
Part of structural body connected with two adjacent sheet parts
Partie de structure jointe avec deux tôles adjacentes

(30) Priorität: 28.06.2002 DE 10228975
(43) Veröffentlichungstag der Anmeldung: 02.01.2004
(73) Patentinhaber: AUDI AG, 85045 Ingolstadt (DE)
(72) Erfinder: Stegmaier, Jürgen, 71737 Kirchberg (DE); Kestler, Axel, 74172 Neckarsulm (DE)
(74) Vertreter: Engelhardt, Harald

(56) Entgegenhaltungen:
- EP-A- 1 070 857
- EP-A- 1 180 410
- DE-A- 10 048 232
- DE-A- 10 152 478
- DE-A- 19 523 005
- DE-A- 19 925 521

## Beschreibung

Die Erfindung betrifft einen Fahrzeug-Strukturbereich aus einem Trägerbauteil und zwei damit verbundenen, aneinander angrenzenden Blechbauteilen nach dem Oberbegriff des Anspruchs 1.

Bei einem solchen durch offenkundige Vorbenutzung allgemein bekannten Fahrzeug-Strukturbereich weisen die Blechbauteile jeweils einen Randflansch als Schweißflansch auf und die Verbindung mit dem Trägerbauteil ist eine Schweißverbindung.

Konkret liegen in der allgemein bekannten Verbindung die beiden Bauteil-Randflansche der beiden Blechbauteile übereinander in der Art eines Sandwichaufbaus. Am Trägerbauteil liegt der Bauteil-Randflansch des ersten Blechbauteils an und darauf ist der Bauteil-Randflansch des zweiten Blechbauteils angeordnet. Somit liegen zwei Blechschichten übereinander auf der Wand des Trägerbauteils, was beim Schweißvorgang für eine einwandfreie Schweißnaht eine relativ hohe Schweißenergie erfordert. Ist als Schweißverfahren eine Laserschweißung zur Verbindung der drei Bauteile eingesetzt, so ist die Energieeinbringung zur Herstellung der Schweißnaht nur von z. B. der Oberseite des Fahrzeug-Strukturbereichs her möglich, wodurch der benötigte Energiebedarf für eine Durchschweißung durch die drei Bauteilschichten nachteilig noch mal gegenüber einem zweiseitigen Schweißverfahren erhöht wird. Je größer der beim Schweißvorgang eingesetzte Energieeintrag ist, umso größer ist die Gefahr eines Verziehens und/oder eines Verspannens der einzelnen Bauteile. Dies kann nachteilig zu nicht tolerierbaren Toleranzen und/oder zu Nacharbeiten an dem Fahrzeug-Strukturbereich führen, wodurch unter Anderem die Herstellungskosten erhöht werden.

Um die Bauteile maßhaltig mittels der Schweißverbindung verbinden zu können, werden diese lagegenau positioniert und z. B. mittels Spannelementen in ihrer Position zur Anbringung der Schweißnaht gehalten. Durch das Übereinanderliegen der beiden Bauteil-Randflansche der beiden Blechbauteile erfordert die genaue Positionierung der beiden Blechbauteile zueinander und ein Verspannen ohne ein gegenseitiges Verrutschen der Bauteile erhöhte handwerkliche Fertigkeiten.

Aufgabe der Erfindung ist es, einen Fahrzeug-Strukturbereich so weiterzubilden, dass eine Schweißverbindung mit weniger Energieeintrag und damit reduzierter Gefahr für eine Verspannung und/oder ein Verziehen der Bauteile herstellbar ist und dass ein einfaches Spannen der Bauteile möglich ist.

Diese Aufgabe wird mit den Merkmalen des Anspruchs 1 gelöst.

Gemäß Anspruch 1 liegen die Randflansche der beiden Blechbauteile am Trägerbauteil aneinandergrenzend an. Die Randflansche weisen jeweils eine zugeordnete ineinandergreifende Zahnstruktur auf und über und entlang der ineinandergreifenden Zahnstruktur ist jeweils über einen Zahnbereich des einen Randflansches und im weiteren Verlauf über den Zahnbereich des anderen Randflansches eine Schweißnaht als Schweißverbindung gelegt.

Vorteilhaft bei diesem Fahrzeug-Strukturbereich ist, dass die beiden Randflansche der beiden Blechbauteile am Trägerbauteil nicht übereinanderliegen, sondern aneinandergrenzend am Trägerbauteil anliegen. Somit liegen nur zwei Blechschichten übereinander, wodurch der benötigte Energieeintrag für die Herstellung der Schweißnaht reduziert werden kann. Dadurch ist auch die Gefahr eines Verspannens und/oder eines Verziehens des Trägerbauteiles bzw. der beiden Blechbauteile reduziert. Aufgrund der ineinandergreifenden Zahnstruktur an den beiden Randflanschen ist eine Art Vorjustierung der beiden Blechteile zueinander möglich, wodurch das Spannen der beiden Blechbauteile am Trägerbauteil zur Anbringung der Schweißnaht erleichtert ist. Aufgrund der Zahnstruktur ist ein gegenseitiges Verrutschen in Schweißnahtrichtung der beiden Blechbauteile weitgehend ausgeschlossen.

In einer besonders bevorzugten Ausgestaltung ist das Trägerbauteil gemäß Anspruch 2 ein Hohlträger. Ist das Trägerbauteil als Hohlträger ausgeführt, so treten die Nachteile des Verziehens bzw. Verspannens des Trägerbauteils beim Schweißvorgang des gattungsgemäßen Fahrzeug-Strukturbereichs besonders auf, da die Hohlträgerwand, an der die Schweißflansche anliegen, nur von deren Seite her, d. h. einseitig, für den Schweißvorgang zugänglich ist. Die Verwendung von z. B. einer Schweißzange, die von beiden Seiten an die zu verschweißenden Bauteile angreift, ist bei einem Hohlträger als Trägerbauteil nicht möglich. Durch das aneinandergrenzende Anliegen der beiden Schweißflansche am Hohlträger ist demgegenüber ein geringerer Energieeintrag für die Schweißung ausreichend, so dass die Gefahr eines Verziehens bzw. Verspannens reduziert ist. Die Problematik, dass der Fahrzeug-Strukturbereich an der zu verschweißenden Stelle nur einseitig zugänglich ist, kann auch bei anderen Anordnungen des Trägerbauteils und der damit zu verbindenden Blechbauteile auftreten. So kann z. B. aufgrund von baulichen Gegebenheiten der Zugang zu der den Schweißflanschen abgewandten Trägerbauteilseite nicht möglich sein, so dass beim Schweißvorgang der Energieeintrag in die betroffenen Bauteile nur von einer Seite her erfolgen kann.

In einer Weiterbildung ist gemäß Anspruch 3 der Hohlträger ein Leichtmetall-Hohlträger als Strangprofil und/oder durch Innenhochruck (IHD) und/oder durch Außenhochdruck (AHD) verformt. Somit ist die erfindungsgemäße Verbindungstechnik bei modernen Karosserien mit Trägerstrukturen aus Leichtmetall-Hohlträgern einsetzbar. Die Leichtmetall-Hohlträger werden mittels Leichtmetall-Gussknoten zu der gesamten Trägerstruktur zusammengesetzt, wobei an die Trägerstruktur weitere angrenzende Blechbauteile angeschlossen sind. Der erfindungsgemäße Fahrzeug-Strukturbereich ist bei solchen Trägerstrukturen besonders vorteilhaft einsetzbar, da aufgrund des Bausystems der Karosserie eine große Anzahl an Schweißverbindungen zwischen zwei aneinander angrenzend anliegenden Blechbauteilen an Leichtmetall-Hohlträgern notwendig ist. Aufgrund des relativ niedrigen Energiebetrags beim Schweißvorgang ist ein Verziehen bzw. ein Verspannen der Trägerstruktur der Karosserie weitgehend ausgeschlossen. Zudem ist der zum Schweißen notwendige Energieverbrauch gesenkt, was zu niedrigeren Herstellungskosten führt.

Die Schweißnaht ist gemäß Anspruch 4 als Laser-Schweißnaht ausgeführt. Damit ist ein besonders geeignetes Schweißverfahren zur Herstellung der Schweißverbindung beansprucht. Da beim Laser-Schweißverfahren der Energieeintrag an die zu verschweißenden Bauteile nur von einer Seite her erfolgt, ist diese Schweißart vorteilhaft auch verwendbar, wenn das Trägerbauteil z. B. als Leichtmetall-Hohlträger ausgeführt ist. Grundsätzlich ist jedes Schweißverfahren, das den geforderten Ansprüchen entspricht, einsetzbar.

Die Schweißnaht kann über alle Zahnbereiche durchgehend ausgeführt sein oder sie ist als jeweils unterbrochene Wechsel-Schweißnaht gemäß Anspruch 5 ausgeführt. Die Wechsel-Schweißnaht ist jeweils nur in einem Zahnbereich angebracht und im Übergangsbereich von einem Zahnbereich zum nächsten Zahnbereich unterbrochen. Damit wird eine je nach den Gegebenheiten ausreichend stabile Schweißverbindung erhalten, bei der der Energieeintrag während des Schweißvorgangs vorteilhaft noch weiter reduzierbar ist.

In einer besonders bevorzugten Ausgestaltung gemäß Anspruch 6 sind die Zahnbereiche etwa rechteckig ausgebildet. Alle Zahnbreiten und Zahnzwischenräume der Zahnstruktur sind gleich breit und die Zahnbreiten größer als die Zahnhöhen. Um zwischen den beiden Blechbauteilen einen Toleranzausgleich durchführen zu können ist gemäß Anspruch 7 zwischen den ineinandergreifenden Zahnbereichen und Zahnzwischenräumen ein Zwischenspalt für die Möglichkeit eines gegenseitigen Lagetoleranzausgleichs vorgesehen. Somit sind in einem Idealfall alle Zahnbreiten und Zahnzwischenräume der Zahnstruktur gleich breit, womit eine geeignete konkrete Ausbildung geschaffen ist, die einfach herstellbar ist. Der Zwischenspalt zwischen den Zahnbereichen und Zahnzwischenräumen der beiden ineinandergreifenden Zahnstrukturen der beiden Blechbauteile kann so klein gehalten sein, dass einerseits eine Relativausrichtung der beiden Blechbauteile zueinander möglich ist und zugleich ein Toleranzausgleich der Relativlage der beiden Blechbauteile zueinander durchgeführt werden kann. Aufgrund der Regelmäßigkeit der beiden Zahnstrukturen ist beim Anbringen einer Wechsel-Schweißnaht das Schweißverfahren vereinfacht, da die Längen des Schweißbereiches und des unterbrochenen Bereiches immer gleich lang sind.

In einer konkreten Anwendung ist gemäß Anspruch 8 das Trägerbauteil ein Dachrahmen-Längsträger als bogenförmiger Leichtmetall-Hohlträger. Das erste Blechbauteil ist ein Außenhaut-Seitenblechteil mit einem Seitenblechteil-Randflansch und das zweite Blechbauteil ist ein Dachblech mit einem Dachblech-Randflansch. Zur Ausbildung einer Regenrinne schließen sowohl der Seitenblech-Randflansch als auch der Dachblech-Randflansch an eine stufenförmige Abkantung des zugeordneten Außenhaut-Seitenblechteils und des zugeordneten Dachblechs an. Der Übergang zwischen dem Dachblech und dem Außenhaut-Seitenblechteil stellt für die erfindungsgemäßen Fahrzeug-Strukturbereiche eine besonders geeignete Stelle dar, da wegen der großen Bauteile eine lange Schweißnaht angebracht werden muss, womit die Gefahr eines Verziehens bzw. Verspannens relativ groß ist. Sind die beiden Randflansche mit jeweils ineinandergreifenden Zahnstrukturen ausgebildet und liegen am Leichtmetall-Hohlträger aneinandergrenzend an so ist ein relativ geringer Energieeintrag zur Herstellung der Schweißverbindung ausreichend, wodurch die Gefahr des Verziehens bzw. Verspannens des Leichtmetall-Hohlträgers und/oder des Dachblechs und/oder des Außenhaut-Seitenblechteils reduziert ist. Beim Anbringen einer Wechsel-Schweißnaht ist der notwendige Energieeintrag aufgrund der Unterbrechungen der Schweißnaht zusätzlich reduziert. Die am Boden der Regenrinne angebrachte Schweißnaht im Bereich der beiden Flansche ist keine Dichtschweißung, so dass in allgemein bekannter Art eine Abdichtung der Regenrinne angebracht werden muss.

Anhand einer Zeichnung wird die Erfindung näher erläutert.

Es zeigen:
- Fig. 1: eine schematische Seitenansicht eines Fahrzeug-Strukturbereichs,
- Fig. 2: eine schematische Darstellung des Schnittes A-A von Fig. 1, und
- Fig. 3: eine schematische Draufsicht auf eine Wechsel-Schweißnaht im Bereich einer Regenrinne auf einem Fahrzeugdach.

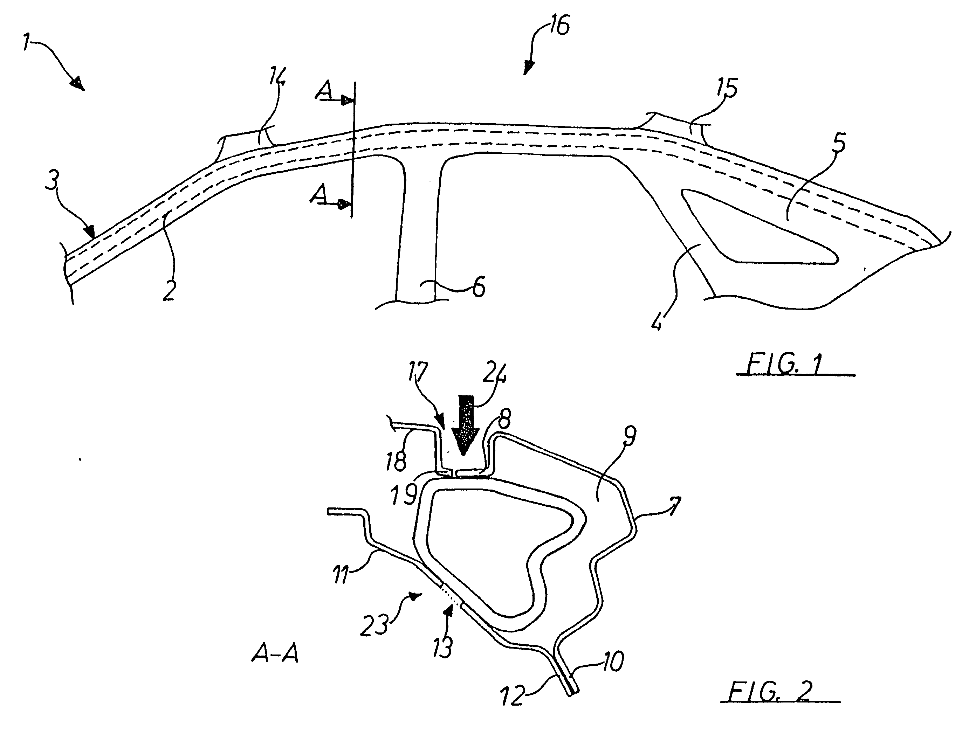

In Fig. 1 ist schematisch eine Seitenansicht eines Fahrzeug-Strukturbereichs 1 dargestellt. Ein bogenförmiger Leichtmetall-Hohlträger 2 als Trägerbauteil (strichliert eingezeichnet) ist als Strangprofil ausgeführt und erstreckt sich vom Bereich einer A-Säule 3 bis etwa zum Fahrzeugende hin zu einer C-Säule 4 bzw. einer D-Säule 5. Zwischen der A-Säule 3 und der C-Säule 4 ist vertikal vom Leichtmetall-Hohlträger 2 nach unten abstehend eine B-Säule 6 ausgebildet. Zwei Querstreben 14 und 15 begrenzen den Dachbereich 16 des Fahrzeug-Strukturbereichs 1 in Fahrzeuglängsrichtung. Die Querstreben 14 und 15 sind nur ansatzweise in Fig. 1 mit dargestellt, die daran anschließende Windschutzscheibe an der vorderen Querstrebe 14 und Heckscheibe an der hinteren Querstrebe 15 sind nicht mit dargestellt.

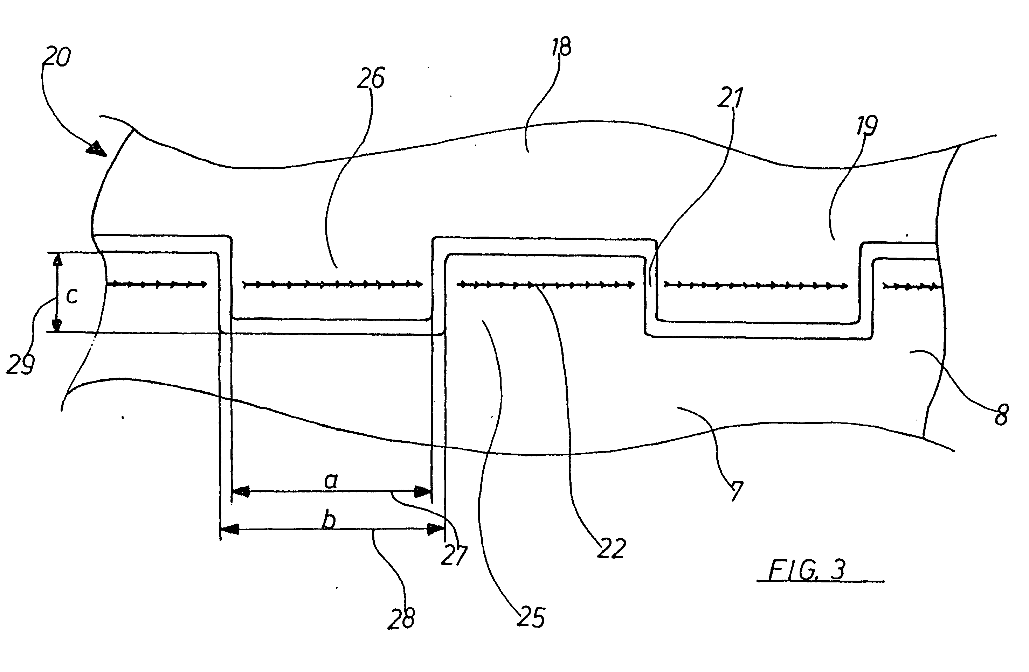

In Fig. 2 ist schematisch der Schnitt A-A von Fig. 1 dargestellt. Der Leichtmetall-Hohlträger 2 ist dergestalt von einem Außenhaut-Seitenblechteil 7 abgedeckt, dass das Außenhaut-Seitenblechteil 7 mit einem oberen Seitenblechteil-Randflansch 8 an der Oberseite des Leichtmetall-Hohlträgers 2 anliegt. Vom oberen Seitenblechteil-Randflansch 8 ausgehend ist das Außenhaut-Seitenblechteil 7 nach oben abgewinkelt und übergreift anschließend mit einem Freiraum 9 zum Leichtmetall-Hohlträger 2 diesen teilweise. Ein seitlicher Seitenblechteil-Randflansch 10 liegt somit im Abstand zum Leichtmetall-Hohlträger 2. An dem seitlichen Seitenblechteil-Randflansch 10 liegt ein Innenblechteil 11 mit einem Innenblechteil-Randflansch 12 an. Das Innenblechteil 11 überdeckt als Dachrahmen-Innenstruktur den Leichtmetall-Hohlträger 2. Im Anlagebereich 23 des Innenblechteils 11 und entlang des Leichtmetall-Hohlträgers 2 sind Langlöcher angeordnet, an denen entlang und durch die eine durchgehende Schweißnaht für eine Verbindung des Innenblechteils 11 mit dem Leichtmetall-Hohlträger 2 gebildet ist.

Zur Ausbildung einer Regenrinne 17 auf dem Dach 16 weist ein Dachblech 18 eine seitliche stufenförmige Abkantung mit einem etwa horizontal gerichteten Dachblech-Randflansch 19 auf, der im Bereich des oberen Seitenblechteil-Randflansches 8 mit dem Leichtmetall-Hohlträger 2 verbunden ist. Der Dachblech-Randflansch 19 und der obere Seitenblech-Randflansch 8 liegen nebeneinander und sind mit dem Leichtmetall-Hohlträger 2 mittels einer Laserschweißung verbunden. Die genaue Ausgestaltung der beiden Randflansche 8 und 19 im Bereich der Regenrinne 17 ist in Fig. 3 dargestellt.

In Fig. 3 ist eine schematische Draufsicht auf eine Wechsel-Schweißnaht 22 im Bereich der Regenrinne 17 im Dachbereich 16. In Fig. 2 ist eine Blickrichtung 24 eingezeichnet, der die Darstellung von Fig. 3 entspricht. Der Seitenblechteil-Randflansch 8 und der Dachblech-Randflansch 19 weisen jeweils eine zugeordnete ineinandergreifende Zahnstruktur 20 auf und über und entlang der ineinandergreifenden Zahnstruktur 20 ist jeweils über einen Zahnbereich 25 des Seitenblechteil-Randflansches 8 und im weiteren Verlauf über einen Zahnbereich 26 des Dachblech-Randflansches 19 eine Wechsel-Schweißnaht 22 als Schweißverbindung gelegt. Die Wechsel-Schweißnaht 22 ist jeweils in den Übergangsbereichen von Zahnbereich 25 des Seitenblechteil-Randflansches 8 zum nächst benachbarten Zahnbereich 26 des Dachblech-Randflansches 19 unterbrochen. Die Zahnbereiche 25 und 26 sind rechteckig ausgebildet dergestalt, dass alle Zahnbreiten a 27 und Zahnzwischenräume b 28 der Zahnstruktur 20 jeweils gleich breit sind. Die Zahnbreiten a 27 sind größer als eine Zahnhöhe c 29. Zwischen den ineinandergreifenden Zahnbereichen 25 und 26 und Zahnzwischenräumen 28 ist ein Zwischenspalt 21 für die Möglichkeit eines gegenseitigen Lagetoleranzausgleichs vorgesehen.

Damit ist im Bereich der Regenrinne 17 ein Fahrzeug-Strukturbereich 1 geschaffen, bei dem aufgrund der Zahnstruktur 20 der beiden Randflansche 8 und 19 eine gegenseitige Justierung und Ausrichtung der beiden Bauteile einfach möglich ist. Durch das Nebeneinanderliegen der beiden ineinandergreifenden Zahnstrukturen 20 der beiden Randflansche 8 und 19 ist eine Blechdoppelung der Randflansche 8 und 19 vermieden, so dass beim Schweißvorgang ein verminderter Energieeintrag für eine optimale Schweißung ausreichend ist. Durch Anbringen der Wechsel-Schweißnaht 22, die zwischen den Zahnbereichen 25 und 26 jeweils unterbrochen ist, ist die einwirkende Schweißenergie nochmals reduziert. Damit ist die Gefahr eines Verziehens bzw. Verspannens während des Schweißvorgangs merklich reduziert.

## Patentansprüche

1. Fahrzeug-Strukturbereich aus einem Trägerbauteil und zwei damit verbundenen, aneinander angrenzenden Blechbauteilen, wobei die Blechbauteile jeweils einen Randflansch als Schweißflansch aufweisen und die Verbindung mit dem Trägerbauteil eine Schweißverbindung ist,
**dadurch gekennzeichnet,**
**dass** die Randflansche (8, 19) der beiden Blechbauteile (7, 18) am Trägerbauteil (2) aneinandergrenzend anliegen,
**dass** die Randflansche (8, 19) jeweils eine zugeordnete ineinandergreifende Zahnstruktur (20) aufweisen, und
**dass** über und entlang der ineinandergreifenden Zahnstruktur (20) jeweils über einen Zahnbereich (25) des einen Randflansches (8) und im weiteren Verlauf über den Zahnbereich (26) des anderen Randflansches (19) eine Schweißnaht (22) als Schweißverbindung gelegt ist.

2. Fahrzeug-Strukturbereich nach Anspruch 1, **dadurch gekennzeichnet, dass** das Trägerbauteil ein Hohlträger (2) ist.

3. Fahrzeug-Strukturbereich nach Anspruch 2, **dadurch gekennzeichnet, dass** der Hohlträger ein Leichtmetall-Hohlträger (2) als Strangprofil und/oder durch Innenhochdruck (IHD) und/oder durch Außenhochdruck (AHD) verformt ist.

4. Fahrzeug-Strukturbereich nach einem der Ansprüche 1 bis 3, **dadurch gekennzeichnet, dass** die Schweißnaht als Laser-Schweißnaht (22) ausgeführt ist.

5. Fahrzeug-Strukturbereich nach Anspruch 4, **dadurch gekennzeichnet, dass** die Schweißnaht als jeweils unterbrochene Wechsel-Schweißnaht (22) ausgeführt ist dergestalt, dass die Wechsel-Schweißnaht (22) jeweils nur in einem Zahnbereich (25, 26) angebracht und im Übergangsbereich von einem Zahnbereich (25) zum nächsten Zahnbereich (26) unterbrochen ist.

6. Fahrzeug-Strukturbereich nach einem der Ansprüche 1 bis 5, **dadurch gekennzeichnet, dass** die Zahnbereiche (25, 26) etwa rechteckig ausgebildet sind dergestalt, dass alle Zahnbreiten (27) und Zahnzwischenräume (28) der Zahnstruktur (20) gleich breit sind und die Zahnbreiten (27) größer als die Zahnhöhen (29) sind.

7. Fahrzeug-Strukturbereich nach einem der Ansprüche 1 bis 6, **dadurch gekennzeichnet, dass** zwischen den ineinandergreifenden Zahnbereichen (25, 26) und Zahnzwischenräumen (28) ein Zwischenspalt (21) für die Möglichkeit eines gegenseitigen Lagetoleranzausgleichs vorgesehen ist.

8. Fahrzeug-Strukturbereich nach einem der Ansprüche 1 bis 7, **dadurch gekennzeichnet,**
**dass** das Trägerbauteil ein Dachrahmen-Längsträger als bogenförmiger Leichtmetall-Hohlträger (2) ist,
**dass** das erste Blechbauteil ein Außenhaut-Seitenblechteil (7) mit einem Seitenblechteil-Randflansch (8) ist,
**dass** das zweite Blechbauteil ein Dachblech (18) mit einem Dachblech-Randflansch (19) ist, und
**dass** zur Ausbildung einer Regenrinne (17) sowohl der Seitenblech-Randflansch (8) als auch der Dachblech-Randflansch (19) an eine stufenförmige Abkantung des zugeordneten Außenhaut-Seitenblechteils (7) und des zugeordneten Dachblechs (18) anschließen.

## Claims

1. Structural part of a vehicle body comprising a supporting component and two sheet-metal components connected thereto and lying adjacent to one another, the sheet-metal components in each case having a peripheral flange in the form of a welding flange and the connection with the supporting component being in the form of a welded joint,
**characterized in that**
the peripheral flanges (8, 19) of the two sheet-metal components (7, 18) rest against the supporting component (2) so as to lie adjacent to one another,
**in that** the peripheral flanges (8, 19) each have a coordinated intermeshing toothed structure (20), and
**in that** in each case a weld (22) in the form of a welded joint is provided across and along the intermeshing toothed structure (20) over one toothed region (25) of one peripheral flange (8) and then over the toothed region (26) of the other peripheral flange (19).

2. Structural part of a vehicle body according to Claim 1, **characterized in that** the supporting component is a hollow support (2).

3. Structural part of a vehicle body according to Claim 2, **characterized in that** the hollow support is a light-metal hollow support (2) formed as an extruded profile and/or formed by internal high pressure (IHP) and/or by external high pressure (EHP).

4. Structural part of a vehicle body according to one of Claims 1 to 3,
**characterized in that** the weld is a laser weld (22).

5. Structural part of a vehicle body according to Claim 4, **characterized in that** each welded joint is formed as a discontinuous alternating weld (22) in such a way that the alternating weld (22) is in each case only formed in a toothed region (25, 26) and is discontinued in the transitional region between one toothed region (25) and the next toothed region (26).

6. Structural part of a vehicle body according to one of Claims 1 to 5,
**characterized in that** the toothed regions (25, 26) are approximately rectangular in shape so that all tooth widths (27) and tooth interspaces (28) of the toothed structure (20) are the same width and the tooth widths (27) are greater than the tooth heights (29).

7. Structural part of a vehicle body according to one of Claims 1 to 6,
**characterized in that** a gap (21) is provided between the intermeshing toothed regions (25, 26) and tooth interspaces (28) to facilitate a reciprocal positional tolerance adjustment.

8. Structural part of a vehicle body according to one of Claims 1 to 7,
**characterized in that**
the supporting component is a longitudinal member of a roof frame and takes the form of a curved light-metal hollow support (2),
**in that** the first sheet-metal component is a side panel (7) of the vehicle body shell and has a peripheral flange (8),
**in that** the second sheet-metal component is a roof panel (18) having a peripheral flange (19), **and**
**in that,** for forming a gutter (17), both the side panel's peripheral flange (8) and the roof panel's peripheral flange (19) adjoin a graduated bevel of the associated side panel (7) and of the associated roof panel (18).

## Revendications

1. Partie de structure de véhicule formée d'un composant support et de deux composants en tôle, limitrophes les uns aux autres, lui étant liés, les composants en tôle présentant chacun un rebord de bordure servant de rebord de soudage et la liaison au composant support étant une liaison soudée,
**caractérisée en ce que** les rebords de bordure (8, 19) des deux composants en tôle (7,18) sont en appui limitrophe l'un à l'autre sur le composant support (2),
**en ce que** les rebords de bordure (8, 19) présentent chacun une structure dentée (20) s'engageant l'une dans l'autre, associée, et
**en ce que**, sur et le long de la structure dentée (20) s'engageant l'une dans l'autre, sur une zone de dent (25) d'un premier rebord de bordure (8) et, dans la continuation, sur la zone de dent (26) de l'autre rebord de dents (19), est chaque fois appliqué un cordon de soudage (22) faisant office de liaison soudée.

2. Partie de structure de véhicule selon la revendication 1, **caractérisée en ce que** le composant support est un support creux ou une poutre creuse (2).

3. Partie de structure de véhicule selon la revendication 2, **caractérisée en ce que** la poutre creuse ou support creux (2) est une poutre creuse en métal léger (2), réalisé(e) sous la forme profilée extrudée et/ou conformé(e) par application d'une haute pression intérieure (IHD) et/ou application d'une haute pression extérieure (AHD).

4. Partie de structure de véhicule selon l'une des revendications 1 à 3, **caractérisée en ce que** le cordon de soudure est réalisé sous la forme de cordon de soudure au laser (22).

5. Partie de structure de véhicule selon la revendication 4, **caractérisée en ce que** le cordon de soudure est réalisé sous la forme chaque fois de cordon de soudure (22) alternant interrompu, de manière que le cordon de soudure alternant (22) ne soit appliqué que dans une zone de dent (25, 26) et soit interrompu dans la zone de transition, entre une zone de dent (25) et la zone de dent (26) suivante.

6. Partie de structure de véhicule selon l'une des revendication 1 à 5, **caractérisée en ce que** les zones de dents (25, 26) sont de forme à peu près rectangulaire et configurées de manière que toutes les largeurs de dents (27) et espaces entre dents (28) de la structure dentée (20) soient de largeur identique et que les largeurs de dents (27) soient supérieures aux hauteurs de dents (29).

7. Partie de structure de véhicule selon l'une des revendication 1 à 6, **caractérisée en ce qu'**entre les zones de dents (25, 26) et les espaces intermédiaires de dents (28), s'engageant les uns dans les autres, est prévu un interstice intermédiaire (21) offrant la possibilité d'une compensation mutuelle des tolérances de position.

8. Partie de structure de véhicule selon l'une des revendications 1 à 7, **caractérisée en ce que**
le composant support est un longeron de cadre de toit, réalisé sous la forme de poutre creuse (2) en métal léger à forme arquée,
**en ce que** le premier composant en tôle est une pièce de tôle latérale de peau extérieure (7), ayant un rebord de bordure (8) formant une pièce latérale en tôle, **en ce que** le deuxième composant en tôle est une tôle de toit (18) avec un rebord de bordure de toiture en tôle (19), et
**en ce que**, pour former une gouttière (17), tant le rebord de bordure latérale en tôle (8), qu'également le rebord de bordure de toit en tôle (19), se raccordent sur un coudage, en forme de gradin, de la pièce latérale en tôle de peau extérieure (7) associée et de la tôle de toit (18) associée.
